# EUROPEAN PATENT SPECIFICATION

(11) **EP 3 653 439 B1**
(45) Date of publication and mention of the grant of the patent: **09.12.2026**
(21) Application number: 18248155.6
(22) Date of filing: 28.12.2018
(51) Int. Cl.: B60Q 1/50, B60Q 1/00, B60Q 1/28, B60Q 1/30, B60Q 5/00

(54) **APPARATUS AND METHOD FOR TRANSMITTING DRIVING INFORMATION OF VEHICLE**
VORRICHTUNG UND VERFAHREN ZUR ÜBERTRAGUNG VON FAHRINFORMATIONEN EINES FAHRZEUGS
APPAREIL ET PROCÉDÉ DE TRANSMISSION D'INFORMATIONS DE CONDUITE D'UN VÉHICULE

(30) Priority: 16.11.2018 KR 20180141617
(43) Date of publication of application: 20.05.2020
(73) Proprietor: Hyundai Mobis Co., Ltd., Gangnam-gu Seoul 06141 (KR)
(72) Inventor: LEE, Eun Jeong, 16891 Gyeonggi-do (KR); BAEK, Seung Woo, 16891 Gyeonggi-do (KR); CHOI, Ban Suk, 16891 Gyeonggi-do (KR); SHIN, Cheon Seop, 16891 Gyeonggi-do (KR); CHA, Jun Hyuk, 16891 Gyeonggi-do (KR); KIM, Moo Kwan, 16891 Gyeonggi-do (KR)
(74) Representative: dompatent

(56) References cited:
- EP-A1- 2 993 083
- WO-A1-2017/180900
- US-A1- 2010 141 418
- US-A1- 2015 194 082
- US-A1- 2017 229 053
- US-A1- 2017 240 098
- US-A1- 2018 174 460
- US-A1- 2018 228 004
- COVESTRO: "Covestro at K 2016: Automotive (English)", YOUTUBE, 12 January 2017 (2017-01-12), pages 1 - 1, XP054979532, Retrieved from the Internet <URL:https://www.youtube.com/watch?v=m5t5B9-Epa8> [retrieved on 20190717]

## Description

### CROSS-REFERENCES TO RELATED APPLICATIONS

The present application claims priority to Korean application number 10-2018-0141617, filed on November 16, 2018.

### BACKGROUND OF THE INVENTION

The present invention relates to an apparatus and method for transmitting driving information of a vehicle, and more particularly, to an apparatus and method for transmitting driving information of a vehicle, which can transmit driving information of the ego vehicle or recognition on a pedestrian or another vehicle around the ego vehicle to the pedestrian or another vehicle through the vehicle body of the ego vehicle.

In general, a vehicle includes various sensors and electronic devices for users' convenience. In particular, research is being actively conducted on an ADAS (Advanced Driver Assistance System) for driving convenience. Furthermore, development for autonomous vehicles is being actively conducted.

Typically, a vehicle has various types of lamps installed therein.

For example, the vehicle includes various lamps having a lighting function (for example, headlamp) of enabling a driver to easily check an object around the vehicle in the night time and a signal function of informing another vehicle or other road users of the driving situation of the ego vehicle. Examples of the lamps may include a daytime running light (DRL), a position lamp, a turn signal light, a brake light and an emergency light. That is, the vehicle may include a device which operates by directly emitting light using a lamp such as a headlamp for irradiating light forward to secure a driver's view, a brake light turned on when the driver steps on the brake, or a turn signal light used during a right or left turn.

The DRL is automatically turned on when the vehicle is started, and automatically turned off when the headlamp is turned on.

In addition, the vehicle includes a reflector which is mounted at the front and rear thereof and reflects light such that the ego vehicle can be easily recognized from outside.

Recently, as the development for the ADAS and the autonomous vehicle is actively conducted, much attention is paid to a technology capable of maximizing the convenience and safety of users and the safety of pedestrians and drivers of other vehicles.

The related art of the present invention is disclosed in Korea Patent Registration No. 10-1908308 registered on October 10, 2018 and entitled "Lamp for Vehicle". US 2017/240098 A1 discloses an apparatus for transmitting driving information of a vehicle including: a surrounding information sensing unit configured to sense an obstacle positioned within a designated distance around the vehicle; a control unit configured to determine a surrounding situation of the ego vehicle or whether the surrounding situation was recognized, based on the information sensed through the surrounding information sensing unit, and output information through an information output unit, the information corresponding to the determined surrounding situation of the ego vehicle or whether the surrounding situation was recognized; and the information output unit including a display lamp and speaker installed on the vehicle body. US 2017/229053 A1 or WO 2017/180900 A1 disclose a similar apparatus.

### SUMMARY OF THE INVENTION

Embodiments of the present invention are directed to an apparatus and method for transmitting driving information of a vehicle, which can transmit driving information of the ego vehicle or recognition on a pedestrian or another vehicle around the ego vehicle to the pedestrian or another vehicle through the vehicle body of the ego vehicle.

The invention is defined by the features of claims 1 and 9. According to the invention, an apparatus for transmitting driving information of a vehicle may include: a surrounding information sensing unit configured to sense an obstacle positioned within a designated distance around the vehicle or an obstacle approaching within a designated distance; a vehicle information sensing unit configured to sense a status of the ego vehicle; a control unit configured to determine a surrounding situation of the ego vehicle or whether the surrounding situation was recognized, based on the information sensed through the surrounding information sensing unit, determine the status of the ego vehicle based on the information sensed through the vehicle information sensing unit, and output information through an information output unit, the information corresponding to the determined surrounding situation of the ego vehicle or whether the surrounding situation was recognized and the determined status of the ego vehicle; and the information output unit including a display lamp and speaker installed on the vehicle body.

The information output unit performs a headlamp function, a DRL (Daytime Running Light) display function, a position display function, a direction indication function, a stop display function and an emergency display function, which are performed by an existing vehicle lamp, and performs the function of the existing vehicle lamp through a divided part of the display region while performing an information output function in a designated display style through the other divided part of the display region.

The surrounding information sensing unit may include one or more of a camera, an infrared sensor, a LiDAR (Light Detection and Ranging) and a laser sensor.

The obstacle may include one or more of a pedestrian, another vehicle and a two-wheeled vehicle.

According to the invention, the vehicle information sensing unit senses one or more of drive/stop of the vehicle, an operation for changing a driving direction, a start-up of the vehicle, a brake operation, a turn signal light operation, the number and positions of passengers, and a steering wheel operation of a driver.

The control unit may output information to the information output unit installed on the vehicle body in a direction facing the obstacle, the information corresponding to the determined surrounding situation of the ego vehicle or whether the surrounding situation was recognized and the determined status of the ego vehicle.

The information output unit is installed at the front of the vehicle.

The display lamp may perform an information output function as a display panel, while performing a function of a lighting lamp using a light emitting device.

The information output unit may be formed in a shape corresponding to an installation position on the vehicle body, and formed or installed in a shape corresponding to the exterior design of the vehicle.

The designated information display style may include one or more of a text, image, pictogram, graphic and figure.

The information output unit may perform an information output function through a lighting pattern.

The information output unit may determine whether the current situation is an information transmission situation or a normal situation, and output a designated lighting pattern in case of the normal situation.

The information output unit may include an E-ink device, and perform blinking a designated number of times or more when outputting information through the E-ink device.

In another embodiment, a driving information transfer method for a vehicle includes: sensing, by a control unit, an obstacle positioned within a designated distance or an obstacle approaching within a designated distance through a surrounding information sensing unit; sensing, by the control unit, a status of the ego vehicle through a vehicle information sensing unit, wherein the vehicle information sensing unit senses one or more of drive/stop of the vehicle, an operation for changing a driving direction, a start-up of the vehicle, a brake operation, a turn signal light operation, the number and positions of passengers, and a steering wheel operation of a driver; determining, by the control unit, the status of the ego vehicle and a surrounding situation, based on the sensed information; setting, by the control unit, a display style and contents of information to be displayed, in response to the determined status of the ego vehicle and the determined surrounding situation; setting, by the control unit, a display direction or display position of the information to be displayed, in response to the determined status of the ego vehicle and the determined surrounding situation; and outputting, by the control unit, the information through an information output unit for a designated time, when the contents, display style and display direction or position of the information to be displayed are set in response to the status of the ego vehicle and the surrounding situation.

The information output unit performs a headlamp function, a DRL display function, a position display function, a direction indication function, a stop display function and an emergency display function, which are performed by an existing vehicle lamp, and perform the function of the existing vehicle lamp through a divided part of the display region while performing an information output function in a designated display style through the other divided part of the display region.

The display direction or position of the information may correspond to the direction or position where the obstacle is present.

The information output unit may be formed in a shape corresponding to an installation position on the vehicle body, and formed or installed in a shape corresponding to the exterior design of the vehicle.

The information output unit may determine whether the current situation is an information transmission situation or a normal situation, and output a designated lighting pattern in case of the normal situation.

In accordance with an aspect, the apparatus and method can transmit the driving information of the ego vehicle or recognition information on a pedestrian or another vehicle around the ego vehicle to the pedestrian or another vehicle through the vehicle body of the ego vehicle.

In accordance with another aspect, the apparatus and method may output the driving information of the ego vehicle or the recognition information on a pedestrian or another vehicle through the vehicle body of the ego vehicle, thereby improving the convenience and safety of the user of the vehicle (or the autonomous vehicle) and the safety of the pedestrian and a driver of another vehicle.

In accordance with still another aspect, the apparatus and method may include the display lamp for transmitting the driving information of the ego vehicle or the recognition information on another vehicle to an ambient pedestrian or a driver of the another vehicle through the vehicle body, thereby improving the exterior quality and visibility.

### BRIEF DESCRIPTION OF THE DRAWINGS

FIG. 1 illustrates a schematic configuration of an apparatus for transmitting driving information of a vehicle in accordance with an embodiment of the present invention.
FIGS. 2A to 2C are diagrams for describing the shape of an information output unit in FIG. 1, depending on installation positions.
FIGS. 3A and 3B and 4A to 4D illustrate the shape of the information output unit installed at the front of a vehicle body in FIG. 2 in more detail.
FIGS. 5A and 5B illustrate the shapes of the information output units installed at the side and top of the vehicle body in FIG. 2 in more detail.
FIG. 6 , which does not form part of the present invention, illustrates the shape of the information output unit installed at the rear of the vehicle body in FIG. 2 in more detail.
FIG. 7 is a flowchart for describing a method for transmitting driving information of a vehicle in accordance with an embodiment of the present invention.

### DESCRIPTION OF SPECIFIC EMBODIMENTS

As is traditional in the corresponding field, some exemplary embodiments may be illustrated in the drawings in terms of functional blocks, units, and/or modules. Those of ordinary skill in the art will appreciate that these block, units, and/or modules are physically implemented by electronic (or optical) circuits such as logic circuits, discrete components, processors, hard-wired circuits, memory elements, wiring connections, and the like. When the blocks, units, and/or modules are implemented by processors or similar hardware, they may be programmed and controlled using software (e.g., code) to perform various functions discussed herein. Alternatively, each block, unit, and/or module may be implemented by dedicated hardware or as a combination of dedicated hardware to perform some functions and a processor (e.g., one or more programmed processors and associated circuitry) to perform other functions.

Hereafter, an apparatus and method for transmitting driving information of a vehicle in accordance with embodiments of the present invention will be described in detail with reference to the accompanying drawings. It should be noted that the drawings are not to precise scale and may be exaggerated in thickness of lines or sizes of components for descriptive convenience and clarity only. Furthermore, the terms as used herein are defined by taking functions of the invention into account and can be changed according to the custom or intention of users or operators. Therefore, definition of the terms should be made according to the overall disclosures set forth herein.

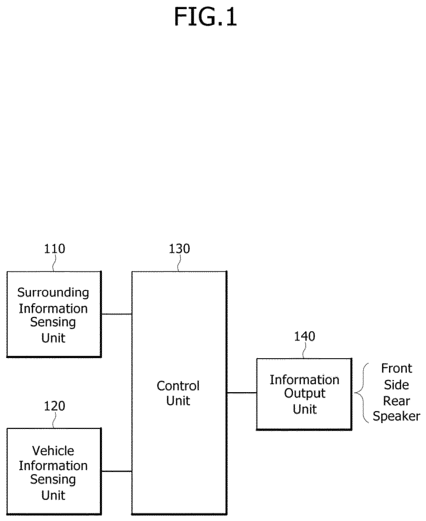

FIG. 1 illustrates a schematic configuration of an apparatus for transmitting driving information of a vehicle in accordance with an embodiment of the present invention.

As illustrated in FIG. 1, the apparatus for transmitting driving information of a vehicle in accordance with the present embodiment may include a surrounding information sensing unit 110, a vehicle information sensing unit 120, a control unit 130 and an information output unit 140.

The surrounding information sensing unit 110 may sense a pedestrian or another vehicle around the ego vehicle.

For example, the surrounding information sensing unit 110 may sense an obstacle (for example, a pedestrian, another vehicle, two-wheeled vehicle or the like) positioned within a designated distance or approaching within a designated distance, using one or more sensors (for example, a camera, infrared sensor, LiDAR (Light Detection and Ranging), laser sensor and the like).

The vehicle information sensing unit 120 may sense the status of the ego vehicle.

For example, the vehicle information sensing unit 120 may sense an operation (or preliminary operation) for driving, stopping or turning the vehicle. Specifically, the vehicle information sensing unit 120 may sense a start-up of the vehicle (a power-on in the case of an electric vehicle), a brake operation, a turn signal light operation, the number and positions of passengers, and a wheel steering operation of a driver (for example, autonomous operation or manual operation).

The control unit 130 may determine the surrounding situations of the ego vehicle (or whether the surrounding situations are recognized), based on the various pieces of information sensed through the surrounding information sensing unit 110.

For example, the control unit 130 may determine whether an obstacle (for example, a pedestrian, another vehicle or two-wheeled vehicle) is around the ego vehicle or is approaching the ego vehicle.

The control unit 130 may determine the status (i.e. the current status) and the future status of the ego vehicle, based on the various pieces of information sensed through the vehicle information sensing unit 120. The future status may include information on whether the vehicle will make a turn, come to a stop, or make a start.

The control unit 130 may output the determined surrounding situations of the ego vehicle and the determined current and future status of the ego vehicle through the information output unit 140.

The information of the ego vehicle, outputted through the information output unit 140 by the control unit 130, may be used for helping an obstacle (for example, a pedestrian, another vehicle or two-wheeled vehicle) to recognize the current status and future status of the ego vehicle, the future status indicating the information on whether the vehicle will make a turn, come to a stop, or make a start. Therefore, the control unit 130 may output the information in such a direction that the obstacle can easily see the information, i.e. a direction facing the obstacle. The control unit 130 may output the information at the front of the ego vehicle body when the obstacle is in front, output the information at the right side of the ego vehicle body when the obstacle is on the right, and output the information at the rear of the ego vehicle body when the obstacle is in the back.

The information output unit 140 may include display lamps and speakers (sound output units) which are installed on the vehicle body (for example, front, side, rear, top and bottom).

The display lamp may perform an information output function as a display panel while performing a lighting lamp function using an LED device (for example, light emitting device). The information may include a text, image, pictogram or figure.

However, the information output unit 140, i.e. the display lamp, may be installed or formed in a different shape depending on the installation position on the vehicle body (for example, front, side or rear). That is, the information output unit 140 may be installed or formed in a shape corresponding to the exterior design (body design) of the vehicle.

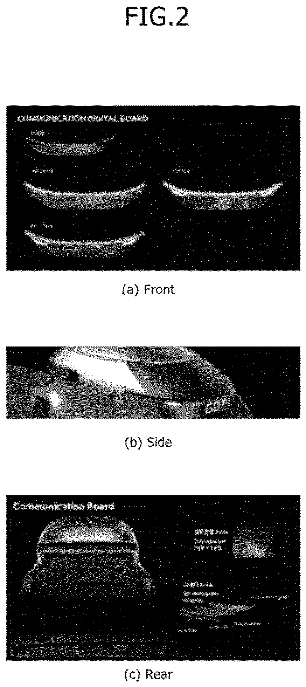

FIGS. 2A to 2C are diagrams for describing the shape of the information output unit depending on the installation position in FIG. 1.

FIG. 2A illustrates the shape of the information output unit 140 installed at the front of the vehicle body, FIG. 2B illustrates the shape of the information output unit 140 installed at the side and top of the vehicle body, and FIG. 2C illustrates the shape of the information output unit 140 installed at the rear of the vehicle body.

At this time, the information output unit 140 installed on the vehicle body may simultaneously perform the function of an existing vehicle lamp (for example, a headlamp, DRL, position lamp, turn signal light, brake light or emergency light). That is, in the display lamp of the information output unit 140, a part of a display region (for example, a top line region) may function as the existing vehicle lamp such as a headlamp, DRL, position lamp, turn signal light, brake light or emergency light, and another part of the display region (for example, a bottom light pattern) may perform a function of outputting information such as a text, image, pictogram, graphic or figure.

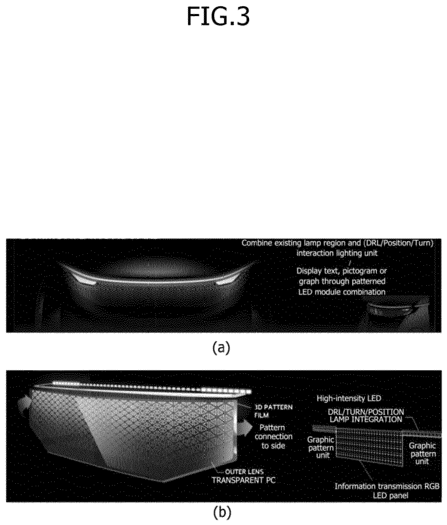

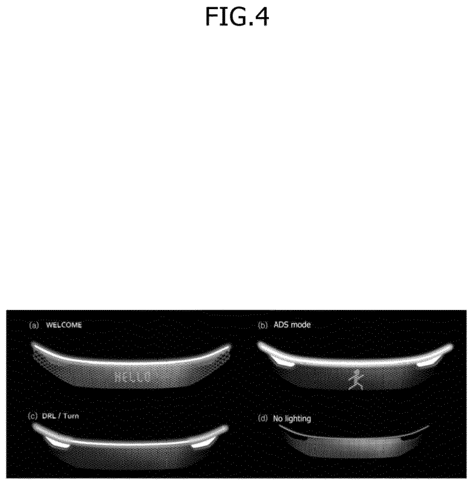

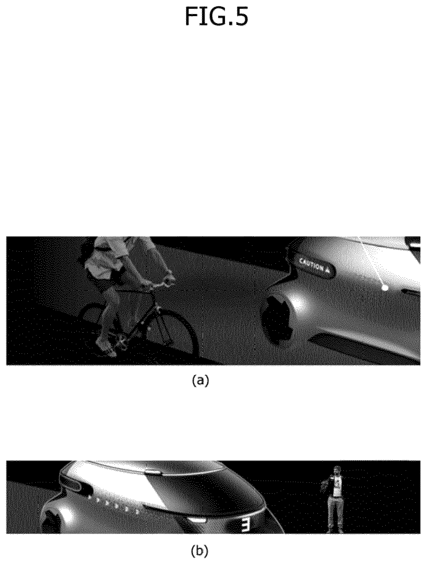

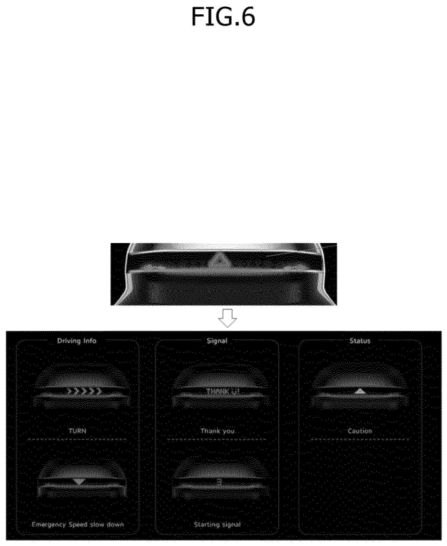

FIGS. 3A and 3B and 4A to 4D illustrate the shape of the information output unit installed at the front of the vehicle body in FIG. 2 in more detail, FIGS. 5A and 5B illustrate the shapes of the information output units installed at the side and top of the vehicle body in FIG. 2 in more detail, and FIG. 6 illustrates the shape of the information output unit installed at the rear of the vehicle body in FIG. 2 in more detail.

Referring to FIGS. 3A and 3B, the information output unit 140 installed at the front of the vehicle body may perform an information output function (or communication lighting function) through a lighting pattern, while performing a headlamp, DRL or position lamp function.

Referring to FIGS. 4A to 4D, the information output unit 140 may operate in different manners depending on whether it is an information transmission situation in which information needs to be transmitted or a normal situation. During the normal situation which is not the information transmission situation, the information output unit 140 may express information in a lighting pattern instead of an existing grille shape, thereby improving the exterior quality (aesthetic effect) of the vehicle.

For example, when the vehicle has the information transmission situation during autonomous driving, the bottom cell pattern region of the information output unit 140 may output information in a pictogram or text through cell combinations to which high-intensity RGB LEDs are applied, the top line region may display a different color depending on a welcome mode or automated driving system (ADS) mode, and the left and right regions LH and RH of the information output unit 140 may implement the DRL/position lamp/turn signal light function. Furthermore, during the normal situation, the information output unit 140 may drive the top line region by turning on the LEDs, and drive the bottom lighting pattern to emit light for beauty.

Referring to FIGS. 5A and 5B, when the ego vehicle (or the autonomous vehicle) is started, the control unit 130 may inform surrounding objects of the driving direction of the vehicle through the information output unit 140 in advance. Furthermore, when the ego vehicle is driving, the control unit 130 may display a lighting signal to surrounding objects, the lighting signal indicating that the ego vehicle recognized the surrounding objects.

For example, when the vehicle starts driving, the vehicle may perform blinking a designated number of times (for example, three times) or more at a predetermined time (for example, about two seconds) before the start of the driving, by displaying the driving direction (forward/reverse) as a directional pictogram (for example, E-ink or lighting) through the information output unit 140 installed at a side surface of the vehicle body.

That is, when a two-wheeled vehicle or pedestrian approaches a side surface of the ego vehicle (or the autonomous vehicle) during driving, the vehicle may display a lighting signal using a pictogram (for example, E-ink or lighting) through the information output unit 140 installed on the vehicle body in a direction corresponding to the position of the object (for example, the two-wheeled vehicle or pedestrian), the lighting signal indicating that the vehicle recognized the object.

Referring to FIG. 6, the control unit 130 may transmit information to an object at the rear of the vehicle (for example, a pedestrian or a driver of another vehicle) through the information output unit 140 installed at the rear of the vehicle body, the information including a direction, appreciation, caution, emergency, deceleration or start (for example, start after three seconds).

For example, the control unit 130 may display the information transmission region to overlap the position of the center lamp at the rear of the vehicle, such that communication contents (for example, appreciation, deceleration or start (for example, start after three seconds)) are simultaneously displayed in addition to the basic function of the rear lamp, which makes it possible to improve the convenience and stability of the user.

Therefore, the control unit 130 may divide the display region of the information output unit 140 installed at the rear of the vehicle body, such that a bottom line region is turned on to perform the basic function of the rear lamp (for example, direction indication, brake, stop or emergency), and a top display region, i.e. a region displayed as a lighting pattern, outputs information or communication contents to be transmitted to the rear through a designated information display method (for example, a text, image, pictogram, graphic or figure).

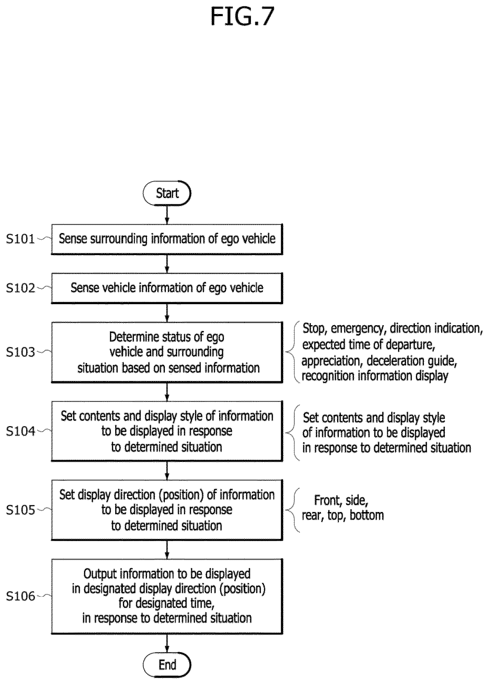

FIG. 7 is a flowchart for describing a method for transmitting driving information of a vehicle in accordance with an embodiment of the present invention.

Referring to FIG. 7, the control unit 130 may sense an obstacle (for example, a pedestrian, another vehicle or two-wheeled vehicle) positioned within a designated distance or approaching within the designated distance through the surrounding information sensing unit 110 at step S101.

The control unit 130 may sense the status of the ego vehicle (for example, a start-up of the vehicle, power-on, brake operation, turn signal light operation, the number and positions of passengers, and a steering wheel operation of a driver) through the vehicle information sensing unit 120 at step S102.

The control unit 130 may determine the status of the ego vehicle and the surrounding situations (for example, stop, emergency, direction indication, a status to inform the driver of the expected time of departure, a status to display appreciation, a status to display deceleration, and a status to display another vehicle recognition information), based on the sensed information (that is, the information sensed through the surrounding information sensing unit or the vehicle information sensing unit) at step S103.

The control unit 130 may set the contents and display style (for example, text, image, pictogram, graphic or figure) of the information to be displayed, in response to the determined status of the ego vehicle and the determined surrounding situations (for example, stop, emergency, direction indication, a status to inform the driver of the expected time of departure, a status to display appreciation, a status to display deceleration, and a status to display another vehicle recognition information), at step S104.

The contents and display style (for example, text, image, pictogram, graphic or figure) of the information may be designated in advance.

The control unit 130 may set the display direction (position) of the information to be displayed, in response to the determined status of the ego vehicle and the determined surrounding situations (for example, stop, emergency, direction indication, a status to inform the driver of the expected time of departure, a status to display appreciation, a status to display deceleration, and a status to display another vehicle recognition information), at step S105.

For example, the display direction (position) of the information may be set to one or more of the front, side, rear, top and bottom of the vehicle body, and include the direction (position) where the obstacle (for example, a pedestrian, another vehicle or two-wheeled vehicle) is present.

When the contents, display style and direction (position) of the information to be displayed are set in response to the determined status of the ego vehicle and the determined surrounding situations (for example, stop, emergency, direction indication, a status to inform the driver of the expected time of departure, a status to display appreciation, a status to display deceleration, and a status to display another vehicle recognition information), the control unit 130 may output the information for a designated time, at step S106.

In accordance with the apparatus and method for transmitting driving information of a vehicle, the ego vehicle can transmit the driving information of the ego vehicle or recognition information on another vehicle to an ambient pedestrian or a driver of the another vehicle through the vehicle body, thereby improving the convenience and safety of the user of the vehicle (or the autonomous vehicle) and the safety of a pedestrian and a driver of another vehicle. In the present embodiment, the apparatus and method may include the display lamp for transmitting the driving information of the ego vehicle or the recognition information on another vehicle to an ambient pedestrian or a driver of the another vehicle through the vehicle body, thereby improving the exterior quality and visibility.

Although preferred embodiments of the invention have been disclosed for illustrative purposes, those skilled in the art will appreciate that various modifications, additions and substitutions are possible, without departing from the scope of the invention as defined in the accompanying claims.

## Claims

1. An apparatus for transmitting driving information of a vehicle, comprising:
a surrounding information sensing unit (110) configured to sense an obstacle positioned within a designated distance around the vehicle or an obstacle approaching within a designated distance;
a vehicle information sensing unit (120) configured to sense a status of the ego vehicle, wherein the vehicle information sensing unit (120) senses one or more of drive/stop of the vehicle, an operation for changing a driving direction, a start-up of the vehicle, a brake operation, a turn signal light operation, the number and positions of passengers, and a steering wheel operation of a driver;
a control unit (130) configured to determine a surrounding situation of the ego vehicle or whether the surrounding situation was recognized, based on the information sensed through the surrounding information sensing unit (110), determine the status of the ego vehicle based on the information sensed through the vehicle information sensing unit (120), and output information through an information output unit (140), the information corresponding to the determined surrounding situation of the ego vehicle or whether the surrounding situation was recognized and the determined status of the ego vehicle; and
the information output unit (140) comprising a display lamp and speaker installed on the vehicle body, the information output unit (140) being installed at a front of the vehicle,
**characterized in that**
the information output unit (140) performs a headlamp function, a DRL (Daytime Running Light) display function, a position display function, a direction indication function, a stop display function and an emergency display function, which are functions of an existing vehicle lamp, and the information output unit (140) functions as the existing vehicle lamp through a part of the display region while performing an information output function in a designated display style through another part of the display region.

2. The apparatus of claim 1, wherein the surrounding information sensing unit (110) comprises one or more of a camera, an infrared sensor, a LiDAR (Light Detection and Ranging) and a laser sensor.

3. The apparatus of claim 1, wherein the control unit (130) outputs information to the information output unit installed on the vehicle body in a direction facing the obstacle, the information corresponding to the determined surrounding situation of the ego vehicle or whether the surrounding situation was recognized and the determined status of the ego vehicle.

4. The apparatus of claim 1, wherein the display lamp performs an information output function as a display panel, while performing a function of a lighting lamp using a light emitting device.

5. The apparatus of claim 1, wherein the information output unit (140) is formed in a shape corresponding to an installation position on the vehicle body, and formed or installed in a shape corresponding to the exterior design of the vehicle.

6. The apparatus of claim 1, wherein the information output unit (140) performs an information output function through a lighting pattern.

7. The apparatus of claim 1, wherein the information output unit (140) determines whether the current situation is an information transmission situation or a normal situation, and outputs a designated lighting pattern in case of the normal situation.

8. The apparatus of claim 1, wherein the information output unit (140) comprises an E-ink device, and performs blinking a designated number of times or more when outputting information through the E-ink device.

9. A method for transmitting driving information of a vehicle, comprising:
sensing, by a control unit (130), an obstacle positioned within a designated distance or an obstacle approaching within a designated distance through a surrounding information sensing unit (110);
sensing, by the control unit (130), a status of the ego vehicle through a vehicle information sensing unit (120), wherein the vehicle information sensing unit (120) senses one or more of drive/stop of the vehicle, an operation for changing a driving direction, a start-up of the vehicle, a brake operation, a turn signal light operation, the number and positions of passengers, and a steering wheel operation of a driver;
determining, by the control unit (130), the status of the ego vehicle and a surrounding situation, based on the sensed information;
setting, by the control unit (130), a display style and contents of information to be displayed, in response to the determined status of the ego vehicle and the determined surrounding situation;
setting, by the control unit (130), a display direction or display position of the information to be displayed, in response to the determined status of the ego vehicle and the determined surrounding situation; and
outputting, by the control unit (130), the information through an information output unit (140) for a designated time, when the contents, display style and display direction or position of the information to be displayed are set in response to the status of the ego vehicle and the surrounding situation, the information output unit (140) being installed at a front of the vehicle,
**characterized in that** the information output unit (140) performs a headlamp function, a DRL display function, a position display function, a direction indication function, a stop display function and an emergency display function, which are functions of an existing vehicle lamp, and the information output unit (140) functions as the existing vehicle lamp through a part of the display region while performing an information output function in a designated display style through another part of the display region.

10. The method of claim 9, wherein the display direction or position of the information corresponds to the direction or position where the obstacle is present.

11. The method of claim 9, wherein the information output unit (140) is formed in a shape corresponding to an installation position on the vehicle body, and formed or installed in a shape corresponding to the exterior design of the vehicle.

12. The method of claim 9, wherein the information output unit (140) determines whether the current situation is an information transmission situation or a normal situation, and outputs a designated lighting pattern in case of the normal situation.

## Patentansprüche

1. Vorrichtung zur Übertragung von Fahrinformationen eines Fahrzeugs, die aufweist:
eine Umgebungsinformationserfassungseinheit (110), die so ausgebildet ist, dass sie ein Hindernis erfasst, das sich innerhalb eines festgelegten Abstands um das Fahrzeug herum befindet, oder ein Hindernis erfasst, das sich innerhalb eines festgelegten Abstands nähert;
eine Fahrzeuginformationserfassungseinheit (120), die so ausgebildet ist, dass sie einen Zustand des Ego-Fahrzeugs erfasst, wobei die Fahrzeuginformationserfassungseinheit (120) eines oder mehrere aus dem Fahren/Anhalten des Fahrzeugs, einem Vorgang zum Ändern der Fahrtrichtung, dem Starten des Fahrzeugs, einem Bremsvorgang, einer Betätigung des Blinklichts, der Anzahl und Positionen der Insassen sowie einer Lenkradbetätigung durch einen Fahrer erfasst;
eine Steuereinheit (130), die so ausgebildet ist, dass sie anhand der von der Umgebungsinformationserfassungseinheit (110) erfassten Informationen eine Umgebungssituation des Ego-Fahrzeugs ermittelt oder feststellt, ob die Umgebungssituation erkannt wurde, den Zustand des Ego-Fahrzeugs anhand der von der Fahrzeuginformationserfassungseinheit (120) erfassten Informationen ermittelt, sowie Informationen über eine Informationsausgabeeinheit (140) ausgibt, wobei die Informationen der ermittelten Umgebungssituation des Ego-Fahrzeugs oder der Tatsache, ob die Umgebungssituation erkannt wurde, sowie dem ermittelten Zustand des Ego-Fahrzeugs entsprechen; und
wobei die Informationsausgabeeinheit (140) eine Anzeigelampe und einen Lautsprecher aufweist, die an der Fahrzeugkarosserie installiert sind, wobei die Informationsausgabeeinheit (140) an einem vorderen Bereich des Fahrzeugs installiert ist,
**dadurch gekennzeichnet, dass**
die Informationsausgabeeinheit (140) eine Scheinwerferfunktion, eine DRL-(Tagfahrlicht)-Anzeigefunktion, eine Positionsanzeigefunktion, eine Richtungsanzeigefunktion, eine Anhalteanzeigefunktion und eine Notfallanzeigefunktion erfüllt, bei denen es sich um Funktionen einer vorhandenen Fahrzeugleuchte handelt, und die Informationsausgabeeinheit (140) über einen Teil des Anzeigebereichs als die vorhandene Fahrzeugleuchte fungiert, während sie über einen anderen Teil des Anzeigebereichs eine Informationsausgabefunktion in einem festgelegten Anzeigestil ausführt.

2. Vorrichtung nach Anspruch 1, wobei die Umgebungsinformationserfassungseinheit (110) eines oder mehrere aus einer Kamera, einem Infrarotsensor, einem LiDAR (Light Detection and Ranging) und einem Lasersensor aufweist.

3. Vorrichtung nach Anspruch 1, wobei die Steuereinheit (130) Informationen an die an der Fahrzeugkarosserie installierte Informationsausgabeeinheit in Richtung des Hindernisses ausgibt, wobei die Informationen der ermittelten Umgebungssituation des Ego-Fahrzeugs oder der Tatsache, ob die Umgebungssituation erkannt wurde, sowie dem ermittelten Zustand des Ego-Fahrzeugs entsprechen.

4. Vorrichtung nach Anspruch 1, wobei die Anzeigelampe eine Informationsausgabefunktion als Anzeigetafel erfüllt und gleichzeitig mithilfe einer lichtemittierende Vorrichtung eine Funktion einer Beleuchtungslampe erfüllt.

5. Vorrichtung nach Anspruch 1, wobei die Informationsausgabeeinheit (140) in einer Form ausgebildet ist, die einer Installationsposition an der Fahrzeugkarosserie entspricht, und in einer Form ausgebildet oder installiert ist, die dem Außendesign des Fahrzeugs entspricht.

6. Vorrichtung nach Anspruch 1, wobei die Informationsausgabeeinheit (140) eine Informationsausgabefunktion mittels eines Beleuchtungsmusters ausführt.

7. Vorrichtung nach Anspruch 1, wobei die Informationsausgabeeinheit (140) ermittelt, ob es sich bei der aktuellen Situation um eine Informationsübertragungssituation oder um eine normale Situation handelt, und im Falle der normalen Situation ein festgelegtes Beleuchtungsmuster ausgibt.

8. Vorrichtung nach Anspruch 1, wobei die Informationsausgabeeinheit (140) eine E-Ink-Vorrichtung aufweist und bei der Ausgabe von Informationen über die E-Ink-Vorrichtung eine festgelegte Anzahl von Malen oder öfter blinkt.

9. Verfahren zur Übertragung von Fahrinformationen eines Fahrzeugs, das umfasst:
Erfassen, mittels einer Steuereinheit (130), eines Hindernisses, das sich innerhalb eines festgelegten Abstands befindet, oder eines Hindernisses, das sich innerhalb eines festgelegten Abstands nähert, über eine Umgebungsinformationserfassungseinheit (110);
Erfassen, mittels der Steuereinheit (130), eines Zustands des Ego-Fahrzeugs über eine Fahrzeuginformationserfassungseinheit (120), wobei die Fahrzeuginformationserfassungseinheit (120) eines oder mehrere aus dem Fahren/Anhalten des Fahrzeugs, einem Vorgang zum Ändern der Fahrtrichtung, dem Starten des Fahrzeugs, einem Bremsvorgang, einer Betätigung des Blinklichts, der Anzahl und Positionen der Insassen sowie einer Lenkradbetätigung durch einen Fahrer erfasst;
Ermitteln, mittels der Steuereinheit (130), des Zustands des Ego-Fahrzeugs und einer Umgebungssituation anhand der erfassten Informationen;
Einstellen, mittels der Steuereinheit (130), eines Anzeigestils und der Inhalte der anzuzeigenden Informationen als Reaktion auf den ermittelten Zustand des Ego-Fahrzeugs und die ermittelte Umgebungssituation;
Einstellen, mittels der Steuereinheit (130), einer Anzeigerichtung oder Anzeigeposition der anzuzeigenden Informationen als Reaktion auf den ermittelten Zustand des Ego-Fahrzeugs und die ermittelte Umgebungssituation; und
Ausgeben, mittels der Steuereinheit (130), der Informationen über eine Informationsausgabeeinheit (140) für eine festgelegte Zeit, wenn die Inhalte, der Anzeigestil und die Anzeigerichtung oder -position der anzuzeigenden Informationen in Abhängigkeit vom Zustand des Ego-Fahrzeugs und der Umgebungssituation eingestellt sind, wobei die Informationsausgabeeinheit (140) an einem vorderen Bereich des Fahrzeugs installiert ist,
**dadurch gekennzeichnet, dass** die Informationsausgabeeinheit (140) eine Scheinwerferfunktion, eine DRL-Anzeigefunktion, eine Positionsanzeigefunktion, eine Richtungsanzeigefunktion, eine Anhalteanzeigefunktion und eine Notfallanzeigefunktion erfüllt, bei denen es sich um Funktionen einer vorhandenen Fahrzeugleuchte handelt, und die Informationsausgabeeinheit (140) über einen Teil des Anzeigebereichs als die vorhandene Fahrzeugleuchte fungiert, während sie über einen anderen Teil des Anzeigebereichs eine Informationsausgabefunktion in einem festgelegten Anzeigestil ausführt.

10. Verfahren nach Anspruch 9, wobei die Anzeigerichtung oder -position der Informationen der Richtung oder Position entspricht, in/an der sich das Hindernis befindet.

11. Verfahren nach Anspruch 9, wobei die Informationsausgabeeinheit (140) in einer Form ausgebildet ist, die einer Installationsposition an der Fahrzeugkarosserie entspricht, und in einer Form ausgebildet oder installiert ist, die dem Außendesign des Fahrzeugs entspricht.

12. Verfahren nach Anspruch 9, wobei die Informationsausgabeeinheit (140) ermittelt, ob es sich bei der aktuellen Situation um eine Informationsübertragungssituation oder um eine normale Situation handelt, und im Falle der normalen Situation ein festgelegtes Beleuchtungsmuster ausgibt.

## Revendications

1. Appareil pour transmettre des informations de conduite d'un véhicule, comprenant :
une unité de détection d'informations environnantes (110) configurée pour détecter un obstacle positionné dans les limites d'une distance désignée autour du véhicule ou un obstacle s'approchant dans les limites d'une distance désignée ;
une unité de détection d'informations de véhicule (120) configurée pour détecter un état du véhicule ego, dans lequel l'unité de détection d'informations de véhicule (120) détecte un ou plusieurs parmi la marche/l'arrêt du véhicule, une opération pour changer une direction de conduite, un démarrage du véhicule, une opération de freinage, une opération de feu clignotant, le nombre et les positions des passagers, et une opération de volant d'un conducteur ;
une unité de commande (130) configurée pour déterminer une situation environnante du véhicule ego ou si la situation environnante a été reconnue, sur la base des informations détectées par l'intermédiaire de l'unité de détection d'informations environnantes (110), déterminer l'état du véhicule ego sur la base des informations détectées par l'intermédiaire de l'unité de détection d'informations de véhicule (120), et délivrer des informations par l'intermédiaire d'une unité de sortie d'informations (140), les informations correspondant à la situation environnante déterminée du véhicule ego ou au fait que la situation environnante a été reconnue ou non et à l'état déterminé du véhicule ego ; et
l'unité de sortie d'informations (140) comprenant une lampe d'affichage et un haut-parleur installés sur la carrosserie du véhicule, l'unité de sortie d'informations (140) étant installée à l'avant du véhicule,
**caractérisé en ce que**
l'unité de sortie d'informations (140) assure une fonction de projecteur, une fonction d'affichage DRL (feu de circulation diurne), une fonction d'affichage de position, une fonction d'indication de direction, une fonction d'affichage stop et une fonction d'affichage d'urgence, qui sont des fonctions d'une lampe de véhicule existante, et l'unité de sortie d'informations (140) fonctionne comme la lampe de véhicule existante par l'intermédiaire d'une partie de la zone d'affichage tout en assurant une fonction de sortie d'informations selon un style d'affichage désigné par l'intermédiaire d'une autre partie de la zone d'affichage.

2. Appareil selon la revendication 1, dans lequel l'unité de détection d'informations environnantes (110) comprend un ou plusieurs parmi une caméra, un capteur infrarouge, un LiDAR (détection et télémétrie par la lumière) et un capteur laser.

3. Appareil selon la revendication 1, dans lequel l'unité de commande (130) délivre des informations à l'unité de sortie d'informations installée sur la carrosserie du véhicule dans une direction faisant face à l'obstacle, les informations correspondant à la situation environnante déterminée du véhicule ego ou au fait que la situation environnante a été reconnue ou non et à l'état déterminé du véhicule ego.

4. Appareil selon la revendication 1, dans lequel la lampe d'affichage assure une fonction de sortie d'informations en tant que panneau d'affichage, tout en assurant une fonction d'une lampe d'éclairage au moyen d'un dispositif électroluminescent.

5. Appareil selon la revendication 1, dans lequel l'unité de sortie d'informations (140) est formée selon une forme correspondant à une position d'installation sur la carrosserie du véhicule, et formée ou installée selon une forme correspondant au design extérieur du véhicule.

6. Appareil selon la revendication 1, dans lequel l'unité de sortie d'informations (140) assure une fonction de sortie d'informations par l'intermédiaire d'un motif d'éclairage.

7. Appareil selon la revendication 1, dans lequel l'unité de sortie d'informations (140) détermine si la situation actuelle est une situation de transmission d'informations ou une situation normale, et délivre un motif d'éclairage désigné dans le cas de la situation normale.

8. Appareil selon la revendication 1, dans lequel l'unité de sortie d'informations (140) comprend un dispositif à encre électronique (E-ink), et effectue un clignotement un nombre désigné de fois ou plus lorsqu'elle délivre des informations par l'intermédiaire du dispositif à encre électronique.

9. Procédé pour transmettre des informations de conduite d'un véhicule, comprenant les étapes consistant à :
détecter, par une unité de commande (130), un obstacle positionné dans les limites d'une distance désignée ou un obstacle s'approchant dans les limites d'une distance désignée par l'intermédiaire d'une unité de détection d'informations environnantes (110) ;
détecter, par l'unité de commande (130), un état du véhicule ego par l'intermédiaire d'une unité de détection d'informations de véhicule (120), dans lequel l'unité de détection d'informations de véhicule (120) détecte un ou plusieurs parmi la marche/l'arrêt du véhicule, une opération pour changer une direction de conduite, un démarrage du véhicule, une opération de freinage, une opération de feu clignotant, le nombre et les positions des passagers, et une opération de volant d'un conducteur ;
déterminer, par l'unité de commande (130), l'état du véhicule ego et une situation environnante, sur la base des informations détectées ;
définir, par l'unité de commande (130), un style d'affichage et des contenus d'informations à afficher, en réponse à l'état déterminé du véhicule ego et à la situation environnante déterminée ;
définir, par l'unité de commande (130), une direction d'affichage ou une position d'affichage des informations à afficher, en réponse à l'état déterminé du véhicule ego et à la situation environnante déterminée ; et
délivrer, par l'unité de commande (130), les informations par l'intermédiaire d'une unité de sortie d'informations (140) pendant une durée désignée, lorsque les contenus, le style d'affichage et la direction ou la position d'affichage des informations à afficher sont définis en réponse à l'état du véhicule ego et à la situation environnante, l'unité de sortie d'informations (140) étant installée à l'avant du véhicule,
**caractérisé en ce que**
l'unité de sortie d'informations (140) assure une fonction de projecteur, une fonction d'affichage DRL, une fonction d'affichage de position, une fonction d'indication de direction, une fonction d'affichage stop et une fonction d'affichage d'urgence, qui sont des fonctions d'une lampe de véhicule existante, et l'unité de sortie d'informations (140) fonctionne comme la lampe de véhicule existante par l'intermédiaire d'une partie de la zone d'affichage tout en assurant une fonction de sortie d'informations selon un style d'affichage désigné par l'intermédiaire d'une autre partie de la zone d'affichage.

10. Procédé selon la revendication 9, dans lequel la direction ou la position d'affichage des informations correspond à la direction ou à la position où l'obstacle est présent.

11. Procédé selon la revendication 9, dans lequel l'unité de sortie d'informations (140) est formée selon une forme correspondant à une position d'installation sur la carrosserie du véhicule, et formée ou installée selon une forme correspondant au design extérieur du véhicule.

12. Procédé selon la revendication 9, dans lequel l'unité de sortie d'informations (140) détermine si la situation actuelle est une situation de transmission d'informations ou une situation normale, et délivre un motif d'éclairage désigné dans le cas de la situation normale.
